(19) Europäisches Patentamt
European Patent Office
Office européen des brevets

(11) Veröffentlichungsnummer : **0 446 168 B1**

(12) # EUROPÄISCHE PATENTSCHRIFT

(45) Veröffentlichungstag der Patentschrift :
**07.09.94 Patentblatt 94/36**

(51) Int. Cl.[5] : **G01J 3/46**

(21) Anmeldenummer : **91810116.3**

(22) Anmeldetag : **21.02.91**

(54) **Verfahren zur Bestimmung von Färbe- und Druckrezepten nach einer Farbvorlage.**

(30) Priorität : **02.03.90 CH 674/90**

(43) Veröffentlichungstag der Anmeldung :
**11.09.91 Patentblatt 91/37**

(45) Bekanntmachung des Hinweises auf die Patenterteilung :
**07.09.94 Patentblatt 94/36**

(84) Benannte Vertragsstaaten :
**BE CH DE ES FR GB IT LI NL**

(56) Entgegenhaltungen :
**EP-A- 0 351 188**
**WO-A-89/09383**
**FR-A- 2 577 670**

(56) Entgegenhaltungen :
**JOURN. OPTIC. SOC. AM., Band 56, Nr. 9, September 1966, Seiten 1256-1259; E. ALLEN: "Basic equations used in computer color matching"**
**REP. PROGR. PHYS., Band 41, Nr. 4, Mai 1978, Seiten 470, 488-494, 500-503; A.R. ROBERTSON: "Colorimetry"**

(73) Patentinhaber : **CIBA-GEIGY AG**
**Klybeckstrasse 141**
**CH-4002 Basel (CH)**

(72) Erfinder : **Hermann, Hanspeter**
**Im Leh 56**
**W-7850 Lörrach (DE)**
Erfinder : **Défago, Raymond**
**Bäumlihofstraae 421**
**CH-4125 Riehen (CH)**
Erfinder : **Franceschini, Peter**
**Rue du Car 64**
**CH-2801 Movelier (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die Erfindung betrifft ein Verfahren zur Bestimmung von Färbe- und Druckrezepten aufgrund einer Farbvorlage, indem jeder Farbton einer Vorlage als Ort in einem Farbraum definiert wird und gemäss diesen Daten des Farbraumes jeder Farbton aus einem einzigen Farbstoff, einer Mischung aus zwei Farbstoffen oder einer Mischung aus drei Farbstoffen nachgestellt wird.

Jeder Industriebereich, der sich mit der Farbgebung beschäftigt, hat vorlagengetreue Nachstellungen von Farbtönen durchzuführen oder neue Farb- und Formzusammenstellungen zu entwerfen. In den letzten Jahren hat sich dieser Industriebereich durch die möglich gewordene Verknüpfung von Design, farbiger Computergraphik, Farbmetrik und Computerstationen sehr stark entwickelt.

Es ist heute möglich eine Farb- und Formvorlage z.B. mittels eines Scanners oder einer Videokamera auf einem Bildschirm darzustellen und wunschgemäss bezüglich Form- und Farbgebung zu variieren sowie dieses Design mittels eines Farbdruckers, z.B. eines Ink-Jet-Druckers, auf jedem beliebigen Substrat auszudrucken. Die Nachstellung der Vorlage bereitet aber immer noch Schwierigkeiten, da die gesuchten Farbtöne z. B. aus einem umfangreichen Farbatlas ausgewählt werden müssen; bekannt sind Sammlungen von bis zu 15000 verschiedenen Farbtönen, sowie computerunterstützte Systeme, die eine sehr grosse Zahl von Farbtönen speichern können und mit Hilfe eines Bildschirmes visualisiert werden können oder auch mittels eines Farbdruckers auf einem beliebigen Substrat ausgedruckt werden können. Die Farbatlanten traditioneller Art und elektronischer Art liefern für jede Farbstoffklasse, die von Substrat zu Substrat verschieden sein kann, die Rezepturen.

Die Herstellung solcher Farbatlanten benötigt einen grossen Aufwand. Die Farbatlanten sind natürlich nur so lange gültig, wie sich die Grundfarbstoffe, die Applikationsverfahren und die Substrate nicht ändern. Jede Aenderung bedingt eine zumindest teilweise oder gar vollständige Erneuerung der Farbatlanten. Diese Verfahrensweise ist daher äusserst unökonomisch.

Bekannt sind ferner farbmetrische Rezeptierungen mittels der Spektrophotometrie. Auch diese Rezeptierung zeigt Mängel bei der Nachstellung, da die bekannten Programme zu wenig selektiv sind und in der Regel eine Vielzahl von Rezepten erstellen, so dass Spezialisten notwendig sind, um aus diesen Vorschlägen die "richtigen" Rezepte auszuwählen. Mit diesen ausgewählten Rezepten wird dann jeweils eine Probefärbung hergestellt und anschliessend entsprechend der Erfahrung des Spezialisten einmal oder auch mehrfach korrigiert.

Alle heute in der Praxis bestehenden und bekannten farbmetrischen Systeme zur Nachstellung einer Vorlage verwenden Reflexionskurven der Vorlage und es wird versucht, durch Mischen bekannter Farbstoffe, die Reflexionskurven der Vorlage anzunähern.

Weil die Reflexionsdaten von den Farbstoffen abhängen und man in der Regel nicht die in der Vorlage verwendeten Farbstoffe einsetzen kann, wird die Nachstellung im allgemeinen eine Reflexionskurve aufweisen, die mehr oder weniger von der Vorlage abweicht. Um die Abweichung möglichst gering zu halten, werden Mischungen verschiedener Farbstoffe verwendet, um Unterschiede der Reflexionskurven auszugleichen. Diese Vorgehensweise ist zeitraubend und bedingt grosse Erfahrung mit den verwendeten Farbstoffen.

Mit dem erfindungsgemässen Verfahren werden die genannten Mängel der bekannten Systeme beseitigt.

Aus der WO-A-89/09383 ist ein Verfahren bekannt, worin anstelle der gemäss dem erfindungsgemässen Verfahren verwendeten Farbtiefen-Kenngrösse FT eine Helligkeitsachse L* verwendet wird.

Aus der FR-A-2 577 670 ist ein Verfahren bekannt, worin zur Farbnachstellung Reflexionsdaten der Farbstoffe herangezogen werden.

Die vorliegende Erfindung betrifft ein Verfahren zur Bestimmung eines einer vorgegebenen Farbe entsprechenden Färbe- oder Druckrezeptes, welches dadurch gekennzeichnet ist, dass

a) eine vorgegebene Farbe in einem FTa*b*-Farbraum definiert wird, wobei FT eine Farbtiefen-Kenngrösse ist, welche unabhängig vom Farbton Orte gleicher Farbtiefe definiert, die definitionsgemäss in einer Ebene des FTa*b*-Farbraumes liegen, und a* und b* Daten des CIELab-Farbkoordinatensystems sind,

b) der FTa*b*-Farbraum für jede Farbtiefenebene mittels der a*- und b*-Daten der für die Nachstellung einzusetzenden Farbstoffe in Dreiecksflächen segmentiert ist, wobei die Eckpunkte der Dreiecksflächen dem Farbort der zur Nachstellung vorgesehenen Farbstoffe entsprechen,

c) in jeder definierten Farbtiefenebene die vorgegebenen a*- und b*-Daten einem bestimmten Verhältnis der Farbstoffe des in Frage kommenden Segments der Farbraumebene entsprechen, und

d) das Verhältnis der Farbstoffe des in Frage kommenden Segments durch ein Iterationsverfahren erhalten wird.

Das erfindungsgemässe Verfahren zeichnet sich dadurch aus, dass jede Vorlage exakt nachgestellt werden kann, weil nicht die beste Annäherung an die Reflexionskurve der Vorlage gesucht wird, sondern die Farbe der Vorlage im Farbraum exakt definiert wird und exakt dieser Farbort im Farbraum zur Rezeptierung aufgesucht wird.

Das erfindungsgemässe Verfahren bedient sich des bekannten CIELab-Farbkoordinatensystems, wobei die Helligkeitsachse L* durch die Farbtiefen-Kenngrösse FT ersetzt wird. Der Vorteil dieser Vorgehensweise ist, dass Farborte gleicher Farbtiefe oder gleicher Farbstärke auf einer Ebene des Farbraumes liegen.

Als Farbtiefen-Kenngrösse FT kommt z.B. die Richttyptiefe in Betracht, wobei die Richttyptiefe nicht nur in den bekannten 2/1, 1/1, 1/3, 1/6, 1/12 und 1/25 Tiefen angegeben wird, sondern noch weiter unterteilt werden kann, z.B. in Schritten von 1/10 Richttyptiefe oder kleiner.

Ferner können als Farbtiefen-Kenngrösse Werte aus Reflexionsmessungen verwendet werden, welche nach Angaben in Textilveredlung, 1986, Seiten 299 bis 304 erhältlich sind. Es hat sich jedoch gezeigt, dass diese Werte noch nicht für alle Zwecke ausreichen und noch einer Verfeinerung bedürfen.

Ein Vorteil der Aufteilung des Farbraumes in Ebenen verschiedener Farbstärke, wobei alle Farbtöne auf einer Ebene die gleiche Farbtiefe aufweisen, ist, dass bei der Festlegung oder Feststellung der Farbtiefe oder Farbstärke der nachzustellenden Vorlage die entsprechende Farbtiefenebene der zu verwendenden Farbstoffe bekannt ist und sich die gewünschte Farbart, a*- und b*-Daten, entweder aus einem einzigen Farbstoff, einer Zweier-Mischung oder einer Dreier-Mischung ermitteln lässt. Da durch die bekannte Farbtiefenebene auch die Einsatzkonzentration jedes Farbstoffes für diese Farbtiefenebene feststeht, ist das Verhältnis von Mischungen der Farbstoffe durch einfache Iterationsverfahren zu ermitteln. Geeignete Iterationsverfahren sind z.B. rein rechnerische oder geometrische, insbesondere computergesteuerte, Annäherungsverfahren. Ein mögliches Iterationsverfahren zur Unterteilung der Dreiecksfläche ist in Fig. 3 angegeben.

Die a*- und b*-Daten entsprechen den bekannten Daten des CIELab-Farbkoordinatensystems, und kennzeichnen die Farbart. Farborte unterschiedlicher Farbtiefe oder Farbstärke liegen im genannten FTa*b*-Farbraum auf verschiedenen Ebenen übereinander. Bei der Verwendung einer Farbtiefen-Kenngrösse aus Reflexionsmessungen hat sich eine zusätzliche Wichtung der Daten über die Farbempfindung des Auges bzw. über den Farbeindruck als günstig erwiesen.

Die Ebenen des FTa*b*-Farbraumes sind in Dreiecksflächen segmentiert, wobei die Eckpunkte der Dreiecksflächen dem Farbort der zur Nachstellung vorgesehenen Farbstoffe entsprechen. Die einzelnen Dreiecksflächen jeder Farbtiefenebene überlappen nicht, so dass jeder Farbort innerhalb dieses durch die FTa*b*-Eichdaten aufgespannten Farbraumes durch nur ein einziges Rezept definiert wird, welches entweder aus nur einem einzigen Farbstoff besteht, wenn der gewünschte Farbort mit den FTa*b*-Daten eines einzigen Farbstoffes übereinstimmt, oder das Rezept ist eine Mischung aus zwei Farbstoffen, wenn der gewünschte Farbort auf der üblicherweise nicht geraden Verbindungslinie zweier Farbstoffe liegt, oder das Rezept ist eine Mischung aus drei Farbstoffen, wobei das Verhältnis dieser drei Farbstoffe durch ein Iterationsverfahren ermittelt wird.

Die Aufteilung des FTa*b*-Farbraumes in Dreiecksflächen kann mit den verschiedensten Farbstoffen durchgeführt werden, wobei es einzig darauf ankommt, dass der Farbraum möglichst gut abgedeckt ist. Die Farbstoffe an sich können nach den verschiedensten Kriterien, wie z.B. Echtheitsniveau, Preis, Liefermöglichkeit, Lagerhaltung ausgewählt werden.

Fig. 1 veranschaulicht die Segmentierung des Farbraumes in einer Farbtiefe in sieben Segmenten, wobei die Bezeichnungen, P1 bis P8, den FTa*b*-Daten der Farbstoffe Gelb (P1), Goldgelb (P2), Orange (P3), Rot (P4), Rotblau (P5), Blau (P6), Türkis (P7) und Schwarz (P8) entsprechen.

Die in Fig. 1 gezeichneten Verbindungslinien der Farbstoffe ergeben sich durch Mischen der Farbstoffe in bestimmten Prozenten bei vorgegebener Farbtiefe. Bei bekannten Eichdaten können die a*- und b*-Koordinaten von einem handelsüblichen Farbmessgerät bestimmt oder ausgemessen werden.

Fig. 2 zeigt ein einziges Segment, es handelt sich um die Dreiecksfläche, welche durch die Punkte P1, P6 und P7 in Fig. 1 dargestellt ist. Die Punkte P1, P6 und P7 definieren Orte, die zu 100 % dem Farbstoff mit den Daten P1, P6 oder P7 entsprechen. Die Zahlen neben der Linie P1P7 definieren den prozentualen Anteil des Farbstoffes mit den Eichdaten P1 der Mischung aus P1 und P7. Die Zahlen neben der Linie P6P7 definieren den prozentualen Anteil des Farbstoffes P6 der Mischung aus P6 und P7.

Fig. 3 zeigt das gleiche Segment wie Fig. 2 wobei eine Strukturierung des Segments vorgenommen wurde. Die Strukturierung basiert auf den prozentualen Anteilen der Farbstoffe mit den Eichdaten P1, P6 und P7. Fig. 3 zeigt ferner eine Möglichkeit für ein Iterationsverfahren um einen Ort im Segment aufzufinden. Vorzugsweise wird in dem erfindungsgemässen Verfahren ein computerunterstütztes oder computergesteuertes Iterationsverfahren eingesetzt.

In den Fig. 1, 2 und 3 wird eine Ebene des FTa*b*-Farbraumes dargestellt. Die Farbtiefen-Kenngrösse FT entspricht z.B. einer 2/3 Richttyptiefe. Für jede Farbtiefen-Kenngrösse FT, z.B. für 1/10, 2/10 oder 1/1 Richttyptiefe, ist die Farbstoffkonzentration, welche notwendig ist um ein bestimmtes Substrat in dieser Tiefe anzufärben, bekannt. Die Farbstoffkonzentration hängt z.B. vom Farbstoff selbst, der gesuchten Farbtiefe, dem Applikationsverfahren und dem zu färbenden oder zu bedruckenden Substrat ab.

Da das Aufziehverhalten vieler Farbstoffe nicht linear ist, kann nur in wenigen Fällen von einer bekannten

Einsatzkonzentration für z.B. 1/1-Richttyptiefe auf die Einsatzkonzentration bei einer anderen Richttyptiefe geschlossen werden. In der Regel ist es erforderlich die Einsatzkonzentration für verschiedene Richttyptiefen, z.B. 1/10-, 1/3-, 1/1- und 2/1-Richttyptiefe, zu ermitteln, und aus diesen Daten eine für jeden gewünschten Farbstoff und das gewünschte zu färbende Material charakteristische Kurve aufzustellen. Bei handelsüblichen Farbstoffen sind in der Regel die Einsatzkonzentrationen für verschiedene Farbtiefen auf verschiedenen Substraten bekannt.

In den Fig. 1, 2 und 3 sind die a*- und b*-Achsen des FTa*b*-Farbraumes angegeben.

Beispielsweise wird gemäss dem erfindungsgemässen Verfahren zur Nachstellung einer Farbe so vorgegangen, dass der Farbort der nachzustellenden Farbe in dem FTa*b*-Farbraum definiert wird. Die Definition über den Farbort der nachzustellenden Farbe liefert z.B. ein Farbdrucker, z.B. ein Ink-Jet-Drucker, welcher bei der Entwicklung des Designs oder der Farbe verwendet wird. Damit sind die a*- und b*-Daten des Farbortes im FTa*b*-Farbraum definiert. Die Farbtiefen-Kenngrösse FT kann z.B. aus einer Richttyptiefen-Farbtafel ermittelt werden. Eine Richttyptiefentafel bzw. eine entsprechende Konzentrationskurve wird zu diesem Zweck von jedem Farbstoff in an sich bekannter Weise erstellt, z.B. für die in Fig. 1 angegebenen 8 Farbstoffe.

Die Segmentierung des Farbraumes richtet sich z.B. nach den vorgenannten Kriterien wie applikatorische Eigenschaften, Preis, Lagerkatalog etc.. Nachdem die Farbstoffe für eine Segmentierung ausgewählt sind und deren Eichdaten aus Reflexionsmessungen bei verschiedenen Konzentrationen auf an sich bekannte Weise ermittelt bzw. in einem Computer gespeichert sind, ist die Segmentierung des FTa*b*-Farbraumes abgeschlossen. Der FT-Wert der nachzustellenden Farbe bzw. die FT-Ebene ist bekannt. Mit diesen gespeicherten Informationen werden für einen definierten Farbort im FTa*b*-Farbraum die Farbstoffkcombinationselemente sowie die Konzentration jedes Farbstoffes für einen bestimmten FT-Wert ermittelt.

Wird z.B. ein Grün-Ton in 2/3-Richttyptiefe mit bekannten a*- und b*-Daten gesucht, sind die folgenden Informationen sofort ersichtlich, sofern die a*- und b*-Daten nicht mit einem einzigen Farbstoff oder einer Zweier-Mischung übereinstimmen:

der Farbton besteht aus Anteilen von

x g/kg Farbstoff mit den Eichdaten P1,
y g/kg Farbstoff mit den Eichdaten P6 und
z g/kg Farbstoff mit den Eichdaten P7.

Die Zahlenwerte für x, y und z entsprechen der Farbstoffkonzentration, um ein bestimmtes Substrat in 2/3 Richttyptiefe zu färben oder zu bedrucken.

Durch ein gegebenenfalls computergesteuertes Iterationsverfahren werden die prozentualen Anteile jedes Farbstoffes für 2/3 Richttyptiefe errechnet, wobei die Summe der Anteile 100 ergeben muss. Beträgt der prozentuale Anteil des Farbstoffes mit den Eichdaten P1 z.B. 50%, so kann aus der vorgenannten Konzentrationskurve dieses Farbstoffes die notwendige Farbstoffkonzentration für 1/3-Richttyptiefe abgelesen werden. Beträgt der prozentuale Anteil des Farbstoffes mit den Eichdaten P7 z.B. 25%, so kann aus der vorgenannten Konzentrationskurve dieses Farbstoffes die notwendige Farbstoffkonzentration für 1/6-Richttyptiefe abgelesen werden.

Eine bevorzugte Ausführungsform des erfindungsgemässen Verfahrens ist dadurch gekennzeichnet, dass eine vorgegebene Farbe und gegebenenfalls eine vorgegebene Form elektronisch, insbesondere digital mittels eines Scanners oder einer Videokamera aufgezeichnet wird, gegebenenfalls auf einem Bildschirm visualisiert wird, und gegebenenfalls bezüglich Form und Farbe noch verändert wird, und dann auf einem beliebigen Substrat mittels eines Farbdruckers, z.B. eines Ink-Jet-Druckers, ausgedruckt wird, wodurch der Farbort im FTa*b*-Farbraum definiert ist, gespeichert wird und nachgestellt werden kann.

Von allen zur Nachstellung einer Farbe in dem erfindungsgemässen Verfahren eingesetzten Farbstoffen sind die Farbstoff-Eichdaten, Reflexionswerte, gespeichert, aus denen a*- und b*-Daten erhalten werden.

Eine besonders bevorzugte Ausführungsform des erfindungsgemässen Verfahrens ist dadurch gekennzeichnet, dass das gesuchte Verhältnis der Farbstoffe des Segments durch ein computergesteuertes Iterationsverfahren erhalten wird.

Eine ebenfalls bevorzugte Ausführungsform des erfindungsgemässen Verfahrens ist dadurch gekennzeichnet, dass Farbstoffe als Eckpunkte eines Segments verwendet werden, die definierte Vorgaben, insbesondere im applikatorischen Verhalten, wie z.B. Kombinierbarkeit, Echtheitsniveau, Preis, Lagerhaltung etc. aufweisen. Das bedeutet, dass gemäss dem erfindungsgemässen Verfahren Farbstoffe für verschiedene Segmentierungen ausgewählt werden können. Nach Bestimmung der aus Reflexionskurven ermittelbaren FTa*b*-Daten der Farbstoffe und nach Segmentierung der Farbraumebene erfolgt gemäss erfindungsgemässem Verfahren die Rezeptierung des gewünschten Farbtons.

Eine ganz besonders bevorzugte Ausführungsform des erfindungsgemässen Verfahrens ist dadurch gekennzeichnet, dass Druckrezepte erstellt werden.

In dem erfindungsgemässen Verfahren können zur Nachstellung einer Farbvorlage Farbstoffe der verschiedensten Farbstoffklassen eingesetzt werden, wobei es gleichgültig ist, ob wasserlösliche oder dispergierte Farbstoffe eingesetzt werden, insbesondere werden Dispersions-, Säure-, Metallkomplex-, Reaktiv-, Küpen-, Schwefel-, Direkt- und Pigment-Farbstoffe, sowie kationische Farbstoffe verwendet. In Betracht kommen auch natürliche Farbstoffe, Entwicklungsfarbstoffe, wie z.B. Naphthol-Farbstoffe, und Nahrungsmittelfarbstoffe. Ferner kommen sämtliche Mischungen der genannten Farbstoffe in Betracht.

Als Beispiel für die verschiedenen Farbstoffklassen sei auf den Colour Index verwiesen; Colour Index, Third Edition, 1970/1971: Acid Dyes, Band 1, Seiten 1001 bis 1562; Basic Dyes, Band 1, Seiten 1607 bis 1688; Direct Dyes, Band 2, Seiten 2005 bis 2478; Disperse Dyes, Band 2, Seiten 2479 bis 2743; Food Dyes, Band 2, Seiten 2773 bis 2788; Leather Dyes, Band 2, Seiten 2799 bis 2835; Natural Dyes, Band 3, Seiten 3225 bis 3256; Piments, Band 3, Seiten 3267 bis 3390; Reactive Dyes, Band 3, Seiten 3391 bis 3560; Solvent Dyes, Band 3, Seiten 3563 bis 3648; Vat Dyes, Band 3, Seiten 3719 bis 3844.

Das erfindungsgemässe Verfahren eignet sich zur Nachstellung einer Farbe auf allen Substraten, insbesondere auf textilen Fasermaterialien, wie Seide, Leder, Wolle, Polyamidfasern, Polyurethanfasern, cellulosehaltige Fasermaterialien, wie Baumwolle, Leinen und Hanf, sowie Celluloseviscose und Zellstoff, Polyesterfasern, Polyacrylfasern, Papier, Folien und Metallen, wie z.B. polymerbeschichtetes Aluminium. Ferner eignen sich Mischungen der genannten Fasermaterialien, wie z.B. Gemische aus Baumwolle mit Polyesterfasern oder Polyamidfasern.

In dem erfindungsgemässen Verfahren ist die Angabe des Substrates, welches zur Nachstellung verwendet wird, erforderlich, da die Farbstoffkonzentrationen u.a. vom Substrat abhängen.

Gegenstand der vorliegenden Erfindung ist ferner die Anwendung des erfindungsgemässen Verfahrens zur Herstellung einer Färbung oder eines Druckes gemäss Vorlage.

Eine bevorzugte Anwendung des erfindungsgemässen Verfahrens ist dadurch gekennzeichnet, dass das erfindungsgemässe Verfahren Teil einer computergesteuerten Färbestrasse oder eines computergesteuerten Druckablaufs (Druckprozess) ist.

Eine besonders bevorzugte Anwendung des erfindungsgemässen Verfahrens ist dadurch gekennzeichnet, dass entsprechend den Vorgaben, z.B. hinsichtlich der applikatorischen Eigenschaften, Preis etc. verschiedene Farbstoffe für die Segmentierung verwendet werden können. Für mehrere Segmentierungen des FTa*b*-Farbraumes werden die FTa*b*-Daten der Farbstoffe, welche den Eckpunkten der Dreiecksflächen und der Farbstoffkonzentration für jede FT-Ebene entsprechen, substratspezifisch in einem Computer gespeichert.

Gegenstand der vorliegenden Erfindung ist ferner eine Anlage zur elektronischen Ausmusterung von Farbvorlagen, worin zur Bestimmung des Färbe- oder Druckrezeptes eine vorgegebene Farbe in einem FTa*b*-Farbraum definiert wird, wobei FT eine Farbtiefen-Kenngrösse ist, welche unabhängig vom Farbton Orte gleicher Farbtiefe definiert, die definitionsgemäss in einer Ebene des FTa*b*-Farbraumes liegen, und a* und b* Daten des CIELab-Farbkoordinatensystems sind, und der FTa*b*-Farbraum für jede Farbtiefenebene mittels der a*- und b*-Daten der für die Nachstellung einzusetzenden Farbstoffe in Dreiecksflächen segmentiert ist, wobei die Eckpunkte der Dreiecksflächen dem Farbort der zur Nachstellung vorgesehenen Farbstoffe entsprechen,

dadurch gekennzeichnet, dass die Anlage folgende Elemente enthält:

a) einen Scanner oder eine Videokamera zur Digitalisierung von Vorlagen,

b) ein Computer-aided-Design-Gerät, welches die Visualisierung und Variation der Vorlage auf einem Bildschirm ermöglicht,

c) einen Farbdrucker, z.B. einen Ink-Jet-Drucker, der die Visualisierung der Vorlage bzw. der variierten Vorlage auf jedem beliebigen Substrat ermöglicht, und der für jede Vorlage bzw. jede variierte Vorlage die Koordinaten im FT-a*b*-Farbraum mittels eines Computers ermittelt,

d) einen Computer, der die FTa*b*-Daten der einzusetzenden Farbstoffe speichert und über ein Iterationsverfahren das Rezept ermittelt.

Das erfindungsgemässe Verfahren und die Anwendung dieses Verfahrens sowie eine Ausmusterungsanlage, welches mit dem erfindungsgemässen Verfahren arbeitet, bietet den Vorteil, dass z.B. bei der Aenderung eines Farbstoffes einer Gamme eines Farbstoffherstellers nicht mehr ein ganzer Farbatlas neu erstellt werden muss, sondern dass lediglich die Eichdaten des neuen Farbstoffes gespeichert werden müssen, und damit die Zweierkombinationstöne und die Mischungen aus drei Farbstoffen berechnet werden können.

Ein weiterer Vorteil des erfindungsgemässen Verfahrens ist, dass alle zur Nachstellung notwendigen Daten, Eichdaten der Farbstoffe, sowie das Iterationsverfahren in einem Computer gespeichert werden können, oder auf einer Diskette gespeichert werden können, so dass ohne eine einzige Ausfärbung, allein durch Diskettenwechsel oder Eingabe von Eichdaten eine Vielzahl von "Farbatlanten" zur Verfügung steht.

Als Farbstoffe können in dem erfindungsgemässen Verfahren handelsübliche Farbstoffe verwendet werden.

Beschreibung der Fig.:

Fig. 1 zeigt schematisch eine Farbtiefenebene des FTa*b*-Farbraumes mit einer Segmentierung in Dreiecksflächen, wobei die Punkte P1 bis P8 Eckpunkte der Dreiecksflächen sind und Farbstoffdaten, FTa*b*-Daten, definieren.

Fig. 2 zeigt schematisch einen Ausschnitt des FTa*b*-Farbraumes, das Segment, welches durch die FTa*b*-Daten der Farbstoffe P1, P6 und P7 charakterisiert ist. Die Zahlen neben der P1P7 Linie definieren den prozentualen Anteil des Farbstoffes P1 der Mischung der Farbstoffe mit den Eichdaten von P1 und P7. Die Zahlen neben der P6P7 Linie definieren den prozentualen Anteil des Farbstoffes P6 der Mischung der Farbstoffe mit den Eichdaten von P6 und P7.

Fig. 3 zeigtchematisch eine Strukturierung des in Fig. 2 angegebenen Segments. Diese Strukturierung ist gleichzeitig der Anfang eines möglichen Iterationsverfahrens, um einen beliebigen Ort in diesem Segment zu definieren.

Die folgenden Beispiele dienen zur Erläuterung der Erfindung.

Darin sind Teile Gewichtsteile und Prozente Gewichtsprozente.

Beispiel 1: Bei der folgenden Nachstellung eines Farbtons wird davon ausgegangen, dass die Eichdaten der für die Nachstellung einzusetzenden Farbstoffe vorliegen, dass der Farbraum segmentiert ist durch die Eichdaten verschiedener Farbstoffe, und dass die Segmentierung der in Fig. 1angegebenen Segmentierung entspricht.

Der nachzustellende Farbton ist ein Blauton mit den folgenden charakteristischen Daten: a* = - 18,15; b* = -27,18; FT = 0,66 (2/3 Richttyptiefe).

Mit den genannten Daten ist der Farbort im FTa*b*-Farbraum definiert. Der nachzustellende Farbton liegt im Segment, welches durch die Farbstoffe mit den Koordinaten von P1, P6 und P7 charakterisiert ist (vgl. Fig. 2, ⊙-Zeichen). Um den nachzustellenden Farbton aus dem Mischungsverhältnis der Farbstoffe dieses Segments zu bestimmen, wird das Segment strukturiert, indem die a*- und b*-Daten von Zweierkombinationstönen (Mischung der Farbstoffe mit den Koordinaten: P1 und P6, P1 und P7, P6 und P7) errechnet werden. Aus den gespeicherten Eichdaten der Farbstoffe können handelsübliche Farbmessgeräte bei bekannter Farbtiefe, bzw. bekannter Konzentration, die a*- und b*-Daten beliebiger Kombinationen berechnen.

In den folgenden Tabellen sind die a*- und b*-Daten einiger Zweierkombinationen angegeben. Die Farbstoffmischung bezieht sich immer auf die Farbtiefen-Kenngrösse FT = 0,66. In den folgenden Tabellen bedeuten FSP1 = Farbstoff mit den Koordinaten P1, FSP6 = Farbstoff mit den Koordinaten P6, und FSP7 = Farbstoff mit den Koordinaten P7 im FTa*b*-Farbraum.

Tabelle 1:

| Farbstoffmischung | a* | b* |
|---|---|---|
| 100 % FSP1 + 0 % FSP7 | - 3,45 | 93,87 |
| 96 % FSP1 + 4 % FSP7 | -40,47 | 63,82 |
| 80 % FSP1 + 20 % FSP7 | -56,89 | 37,22 |
| 60 % FSP1 + 40 % FSP7 | -59,21 | 21,48 |
| 40 % FSP1 + 60 % FSP7 | -56,49 | 8,76 |
| 20 % FSP1 + 80 % FSP7 | -49,87 | - 4,68 |
| 8 % FSP1 + 92 % FSP7 | -41,68 | -16,02 |
| 0 % FSP1 + 100 % FSP7 | -32,55 | -26,70 |

Tabelle 2:

| Farbstoffmischung | a* | b* |
|---|---|---|
| 100 % FSP6 + 0 % FSP7 | 12,22 | -46,16 |
| 75 % FSP6 + 25 % FSP7 | 2,24 | -42,79 |
| 50 % FSP6 + 50 % FSP7 | -7,44 | -38,54 |
| 25 % FSP6 + 75 % FSP7 | -17,53 | -33,88 |
| 0 % FSP6 + 100 % FSP7 | -32,55 | -26,70 |

Tabelle 3:

| Farbstoffmischung | a* | b* |
|---|---|---|
| 100 % FSP1 + 0 % FSP6 | - 3,45 | 93,87 |
| 96 % FSP1 + 4 % FSP6 | -23,36 | 55,59 |
| 80 % FSP1 + 20 % FSP6 | -28,91 | 23,00 |
| 60 % FSP1 + 40 % FSP6 | -26,43 | 5,32 |
| 40 % FSP1 + 60 % FSP6 | -20,68 | -7,19 |
| 20 % FSP1 + 80 % FSP6 | -10,97 | - 21,17 |
| 8 % FSP1 + 92 % FSP6 | -0,69 | -33,01 |
| 0 % FSP1 + 100 % FSP6 | -12,22 | -46,16 |

Die genannte Strukturierung führt durch Verbinden der errechneten a*- und b*-Daten zu der Fig. 3, wobei alle Punkte 100 % ergeben; so setzen sich z.B. die ersten fünf Punkte auf der Linie mit 96 % FSP1 wie folgt zusammen: 96 % FSP1 + 0 % FSP6 + 4 % FSP7; 96 % FSP1 + 1 % FSP6 + 3 % FSP7; 96 % FSP1 + 2 % FSP6 + 2 % FSP7; 96 % FSP1 + 3 % FSP6 + 1 % FSP7; 96 % FSP1 + 4 % FSP6 + 0 % FSP7.

Die Charakterisierung der Farbtiefen-Kenngrösse z.B. als 2/3 Richttyptiefe bedeutet, dass die Konzentration dieser Farbstoffe in dieser Farbtiefe bekannt ist:

Farbstoff mit den Koordinaten P1 in FT = 0,66: 16,9 g/kg
Farbstoff mit den Koordinaten P6 in FT = 0,66: 45,4 g/kg
Farbstoff mit den Koordinaten P7 in FT = 0,66: 48,1 g/kg

Der gewünschte Farbton mit den Daten: FT = 0,66; a* = -18,15; b* = -27,18 liegt in der Farbtiefenebene mit FT = 0,66 auf einem Strukturierungskreuz aus 8 % FSP1 und 46 % FSP6 und 46 % FSP7. Die Summe der Mischung muss 100 ergeben.

Zur Bestimmung der Einsatzmengen ist es notwendig, die Menge Farbstoff für verschiedene Farbtiefen zu kennen. Die Einsatzmenge des Farbstoffes mit den Koordinaten P1 beträgt bei verschiedenen Farbtiefen FT:

| | | | |
|---|---|---|---|
| Farbstoff mit den Koordinaten P1 in: | FT = 1,0 | : | 36,4 g/kg |
| | FT = 0,66 | : | 16,9 g/kg |
| | FT = 0,33 | : | 8,4 g/kg |
| | FT = 0,16 | : | 4,1 g/kg |

Die Einsatzmenge des Farbstoffes mit den Koordinaten P6 beträgt bei verschiedenen Farbtiefen FT:

| | | | |
|---|---|---|---|
| Farbstoff mit den Koordinaten P6 in: | FT = 1,0 | : | 71,3 g/kg |
| | FT = 0,66 | : | 45,4 g/kg |
| | FT = 0,33 | : | 22,1 g/kg |
| | FT = 0,16 | : | 10,5 g/kg |

Die Einsatzmenge des Farbstoffes mit den Koordinaten P7 beträgt bei verschiedenen Farbtiefen FT:

| | | | |
|---|---|---|---|
| Farbstoff mit den Koordinaten P7 in: | FT = 1,0 | : | 79,0 g/kg |
| | FT = 0,66 | : | 48,1 g/kg |
| | FT = 0,33 | : | 20,9 g/kg |
| | FT = 0,16 | : | 9,5 g/kg |

Aus den vorgenannten Einsatzmengen der Farbstoffe mit den Koordinaten P1, P6 und P7 kann die substratspezifische Konzentrationskurve ermittelt werden. Für den gewünschten Farbton mit den Daten FT = 0,66; a* = -18,15; b* = -27,18 ergeben sich folgende Einsatzmengen in g Farbstoff pro kg Druckpaste:

1,35 g/kg Farbstoff mit den Koordinaten von P1
22,14 g/kg Farbstoff mit den Koordinaten von P6
20,9 g/kg Farbstoff mit den Koordinaten von P7

Mit der angegebenen Mischung wird ein Baumwollgewebe in einem Blauton bedruckt in der Richttyptiefe 2/3.

Die eingesetzten Farbstoffe sind Reaktivfarbstoffe mit folgenden Konstitutionen:

FSP1: 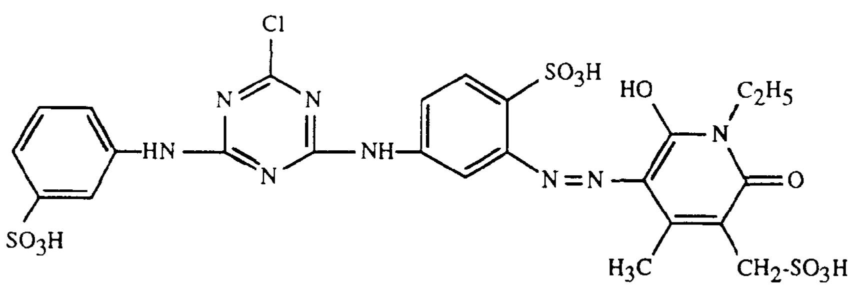 (100)

FSP6: 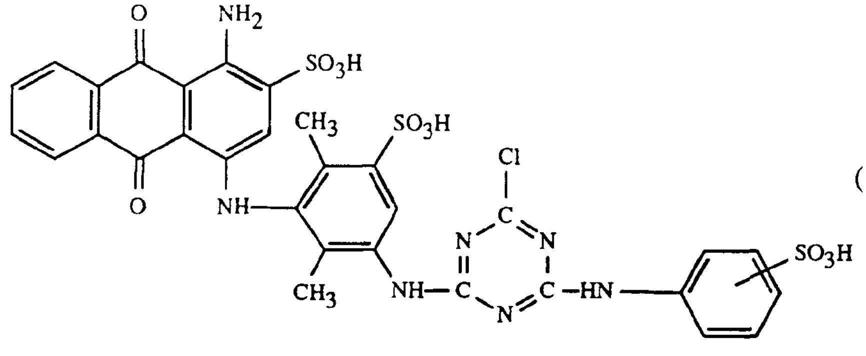 (101)

FSP7:

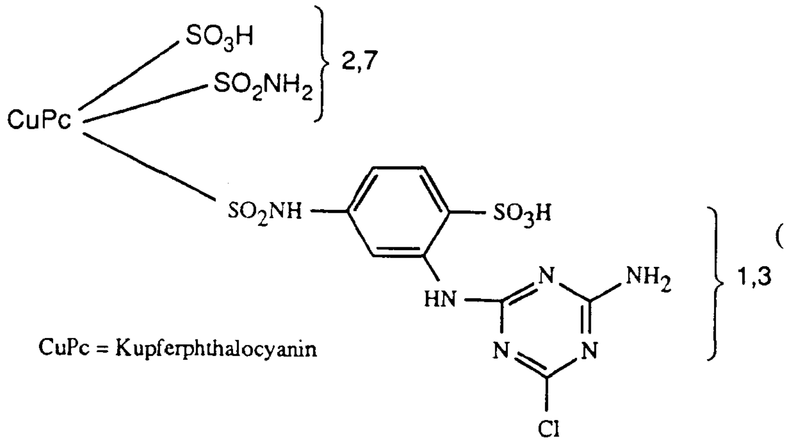

CuPc = Kupferphthalocyanin

(102)

Beispiel 2: Zur Nachstellung ist der Farbort mit den Koordinaten FT = 0,66; a* = -46,00; b* = 16,00 ausgewählt. Bei der folgenden Nachstellung wird davon ausgegangen, dass die Eichdaten der für die Nachstellung einzusetzenden Farbstoffe vorliegen, dass der Farbraum segmentiert ist durch die Eichdaten verschiedener Farbstoffe, dass die Segmentierung der in Fig. 1 angegebenen Segmentierung entspricht, und dass dieses Segment errechnet worden ist und strukturiert worden ist gemäss Beispiel 1, siehe Fig. 2 und 3. Der Farbort mit den gewünschten Koordinaten liebt weder auf einem Strukturierungskreuz noch auf einer der Verbindungslinien der Koordinaten von P1P7, P1P6, P6P7. Um diesen Farbort zu berechnen ist ein Iterationsverfahren notwendig, dass mit einem handelsüblichen Computer oder im einfachsten Fall per Hand durchgeführt wird. Die zur Nachstellung ausbewählten Koordinaten in der Richttyptiefe 2/3 sind in Fig. 3 durch das +-Zeichen dargestellt. Durch ein Iterationsverfahren erbeben sich 63 Teile des gelbfärbenden Farbstoffes mit den Koordinaten von P1. Für die dazugehörenden Mischungsanteile der Farbstoffe mit den Koordinaten von P6 und P7 errechnet sich folgende Verteilung dieser Farbstoffe: 26,5 % des Farbstoffes mit den Koordinaten von P6 und 73,5 % des Farbstoffes mit den Koordinaten von P7. Der Gelbanteil beträgt 63 %, so dass sich die restlichen 37 % im genannten Verhältnis der Farbstoffe mit den Koordinaten von P6 und P7 wie folgt ergeben:

9,8 Teile des blaufärbenden Farbstoffes mit den Koordinaten von P6

27,2 Teile des türkisfärbenden Farbstoffes mit den Koordinaten von P7.

Zur Berechnung der Konzentration der Farbstoffe in der Druckpaste wird gemäss den Angaben in Beispiel 1 für die Farbtiefen-Kenngrösse FT = 0,66 (2/3 Richttyptiefe) folgende Konzentration errechnet:

| | |
|---|---|
| 10,6 | g/kg des Farbstoffes mit den Koordinaten von P1 |
| 4,4 | g/kg des Farbstoffes mit den Koordinaten von P6 |
| 13,1 | g/kg des Farbstoffes mit den Koordinaten von P7. |

Mit der angegebenen Mischung wird ein Baumwollgewebe in dem gewünschten Grünton in der Richttyptiefe 2/3 bedruckt.

Wenn man wie in den Beispielen 1 und 2 angegeben verfährt, und anstelle der Farbstoffe mit den Koordinaten P1, P6 und P7, die in der folgenden Tabelle angegebenen Farbstoffe verwendet, deren FT, a* und b*-Daten ermittelt, sowie deren Einsatzkonzentration bei verschiedenen Farbtiefen, so erhält man ein einer vorgegebenen Farbe entsprechendes Färbe- oder Druckrezept.

Farbstoff Farbton

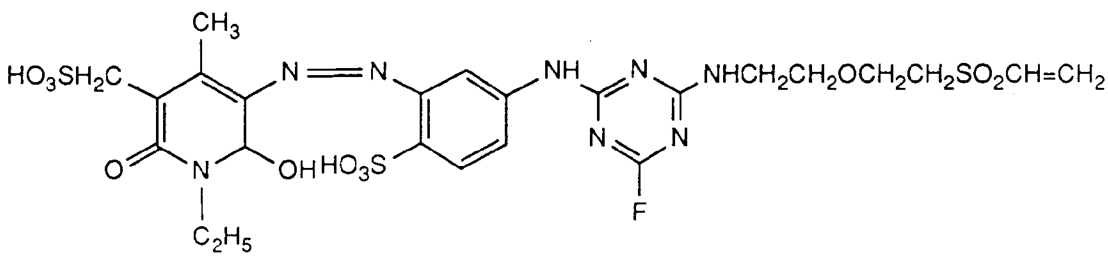

(103) gelb

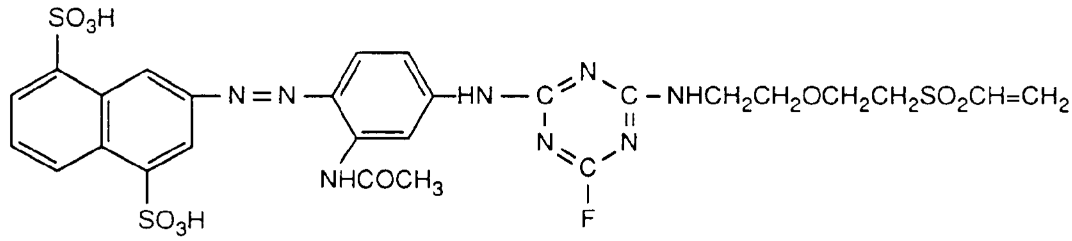

(104) gelb

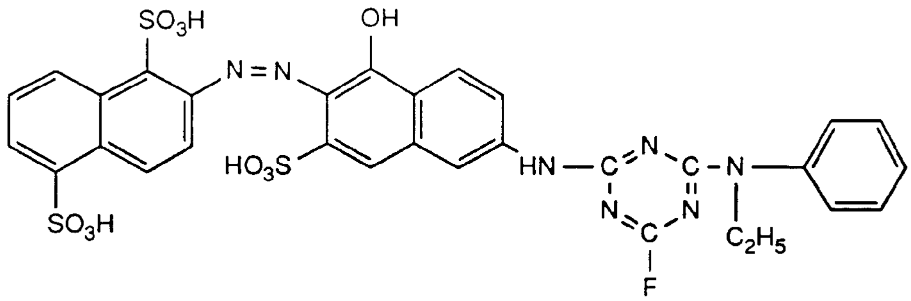

(105) orange

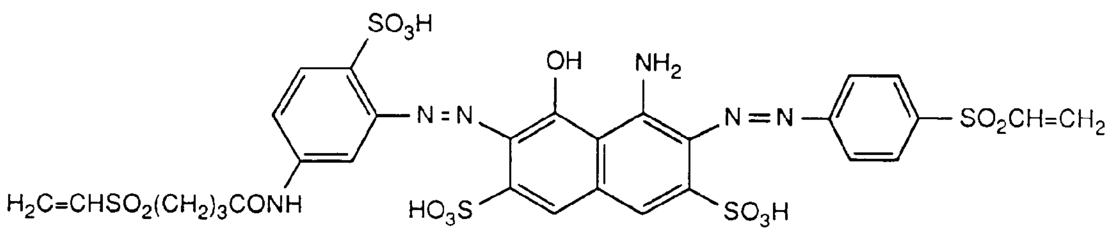

(106) marineblau

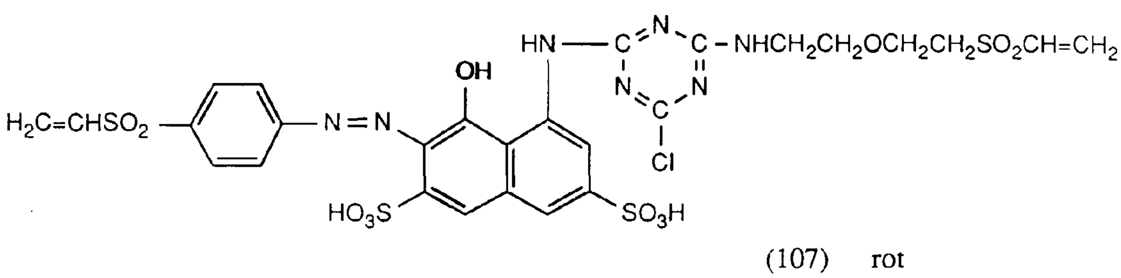

(107) rot

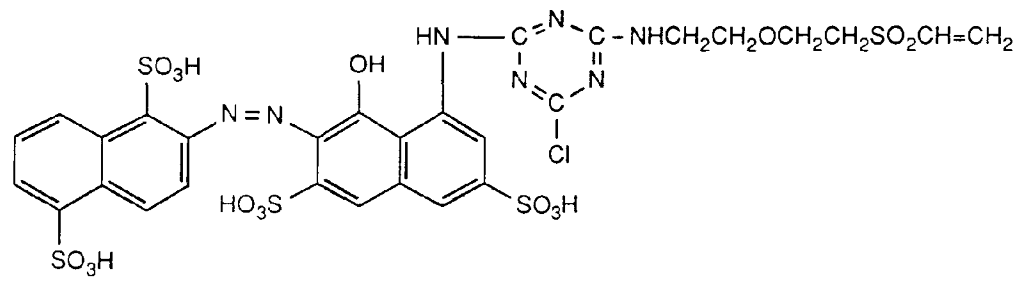

(108) rot

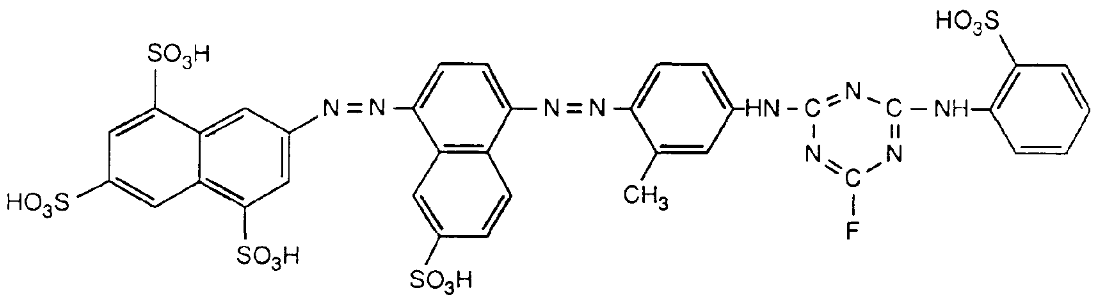

(109) braun

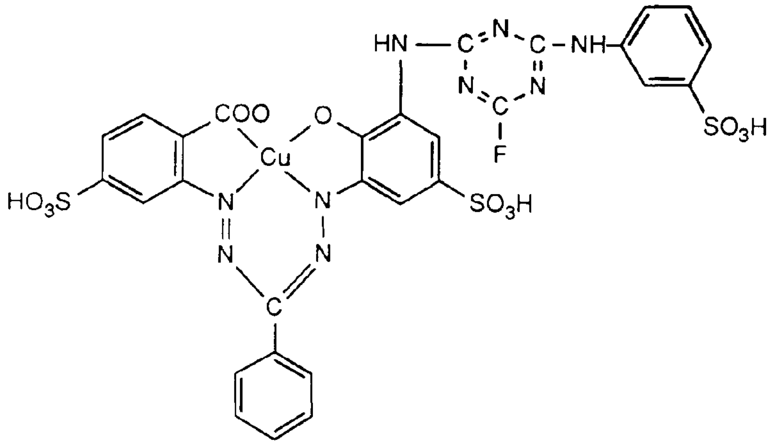

(110) blau

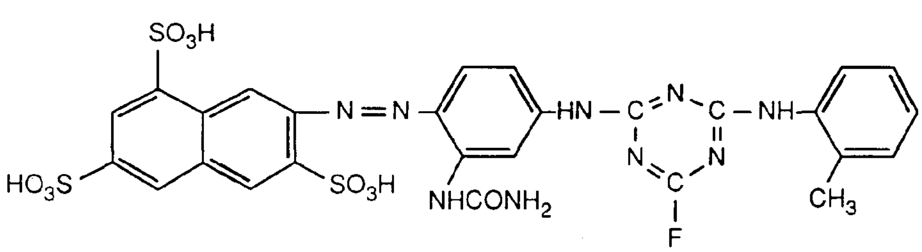

(111) gelb

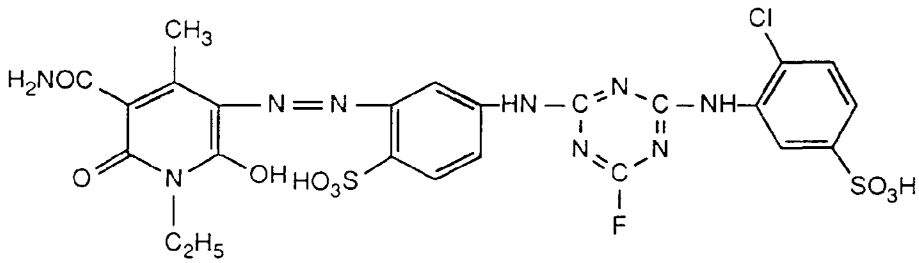

(112) gelb

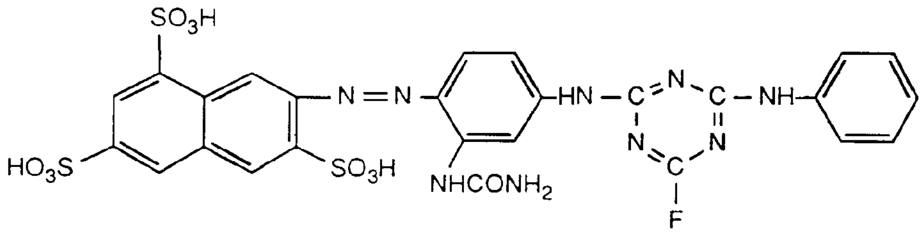

(113) gelb

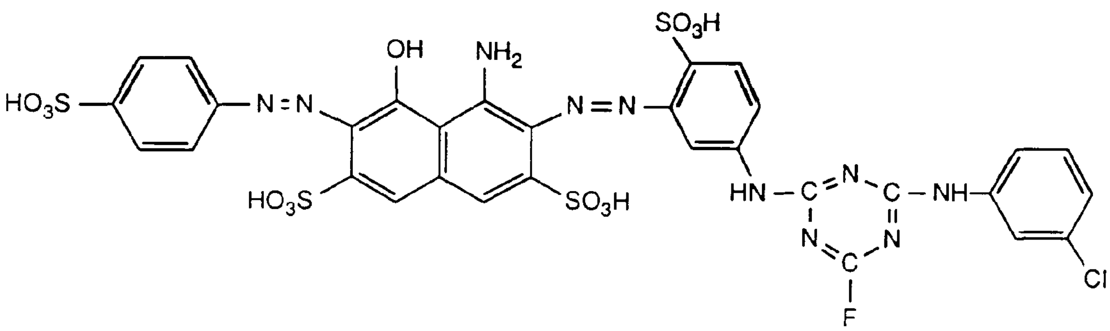

(114) marineblau

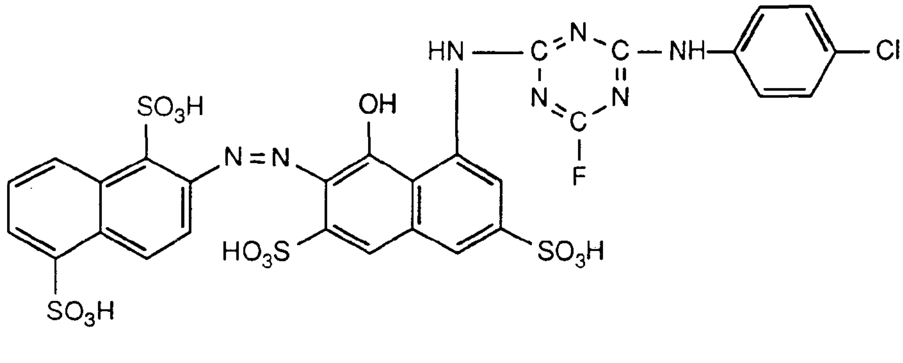

(115) rot

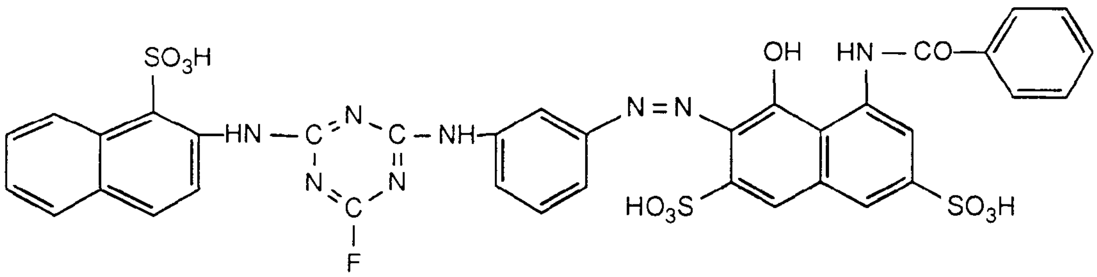

(116) rot

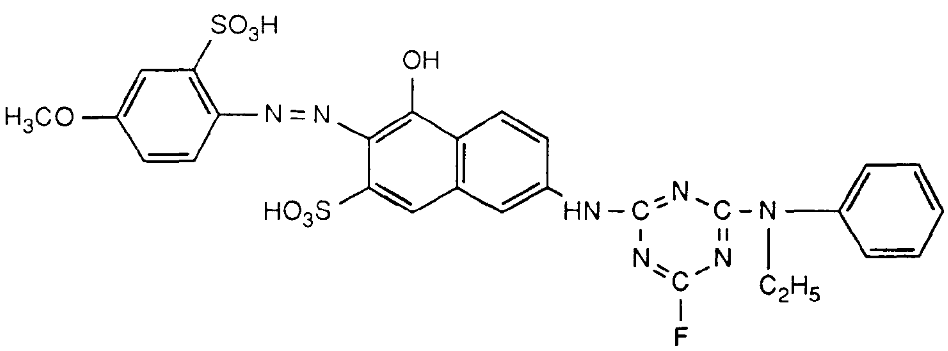

(117)scharlach

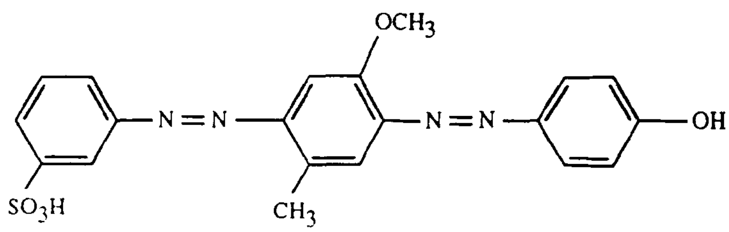

(118) gelb

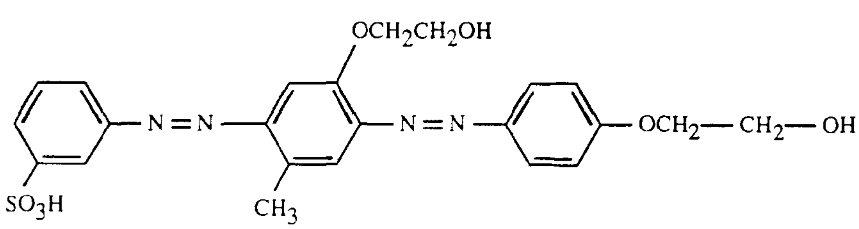

(119) gelb

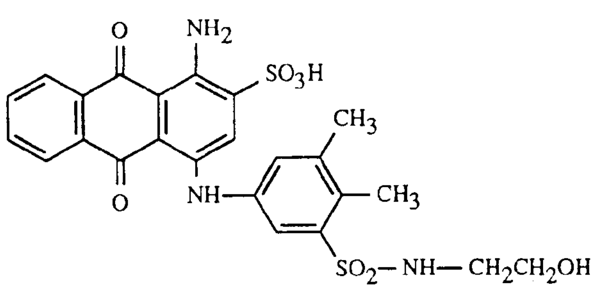

(120) blau

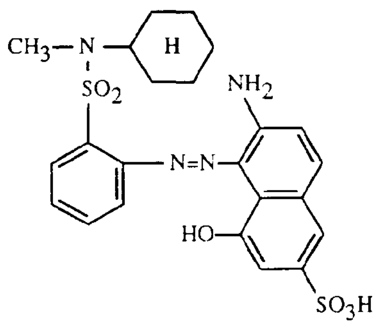

(121) rot

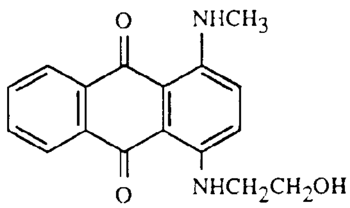

(122) blau

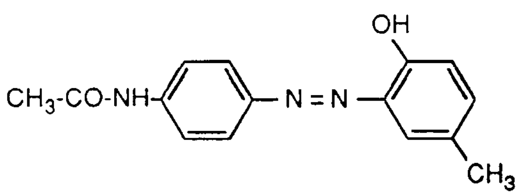

(123) gelb

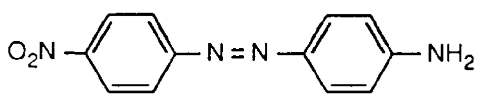

(124) orange

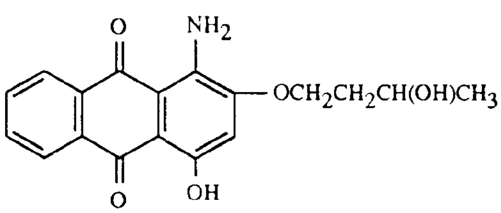

(125) rot

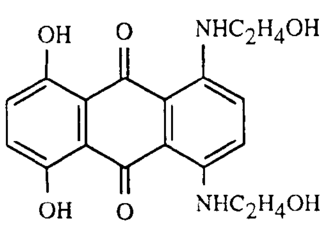

(126) türkis

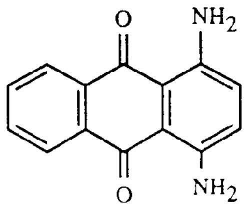

(127) violett

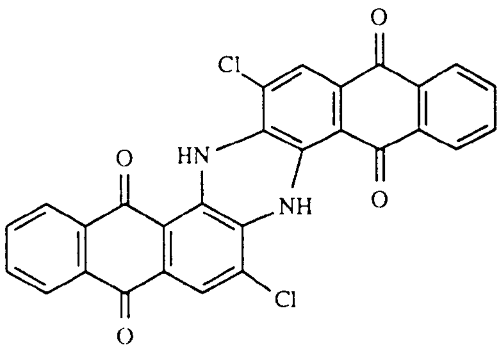

(128) blau

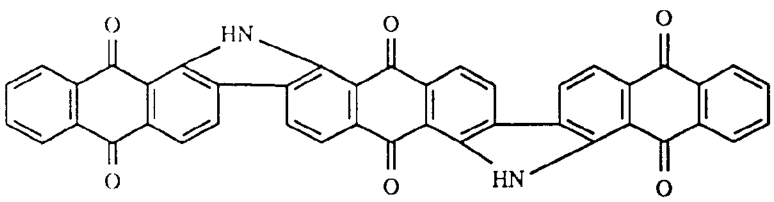

(129) gelb

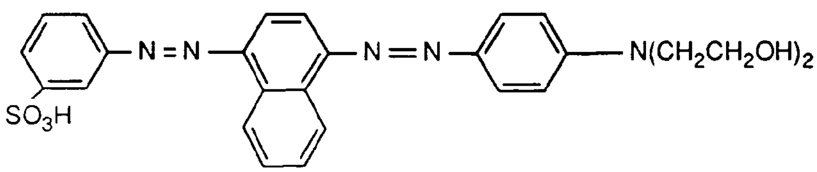

(130) bordeaux

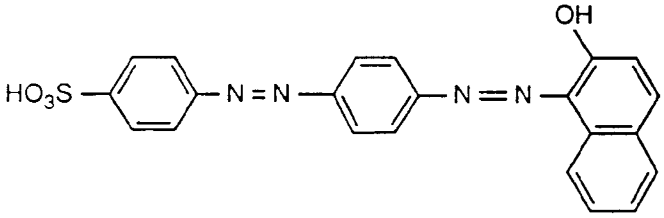

(131) rot

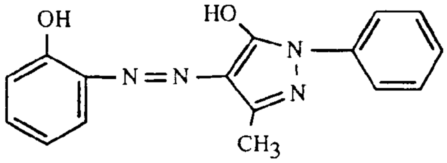

1:2-Cr-Komplex

(132) scharlach

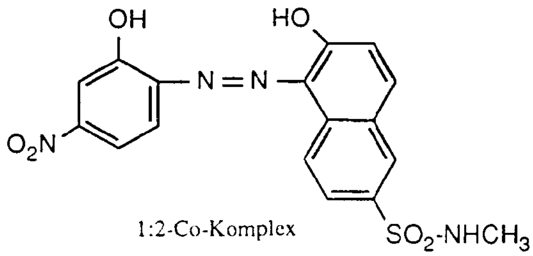

1:2-Co-Komplex

(133) blau

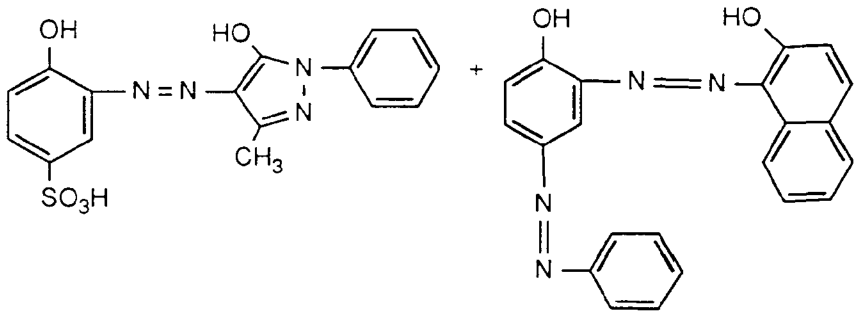

1:2-Cr-Komplex

(134) braun

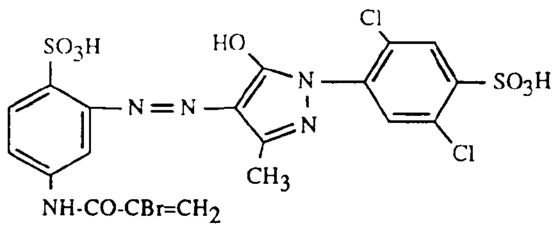

(135) gelb

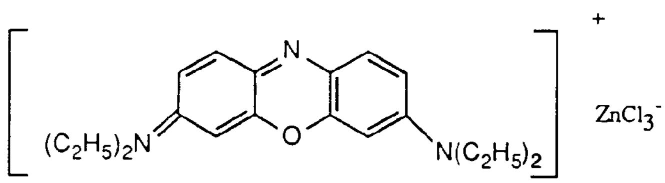

(136) blau

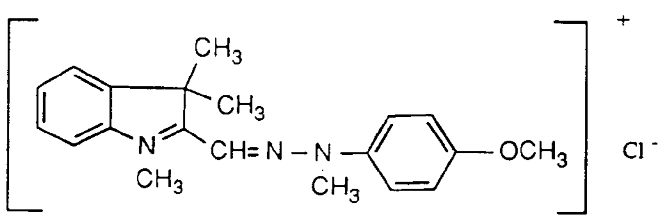

(137) gelb

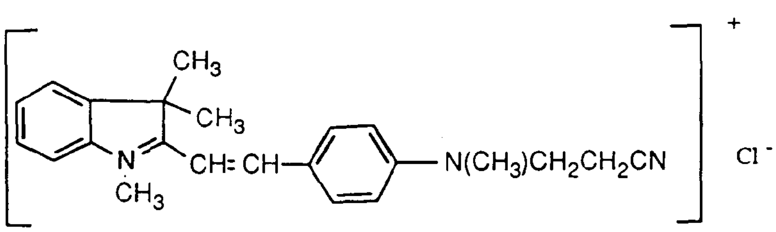

(138) rot

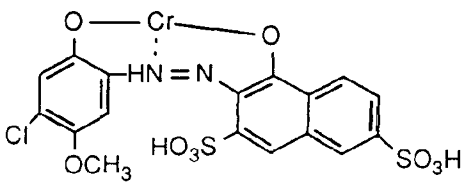

(139) blau

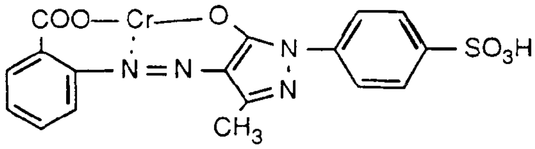

(140) gelb

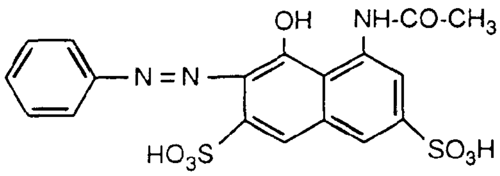

(141) rot

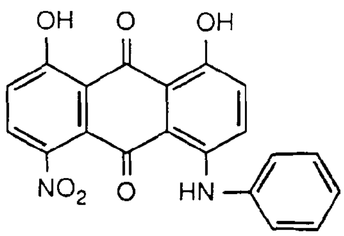

(142) blau

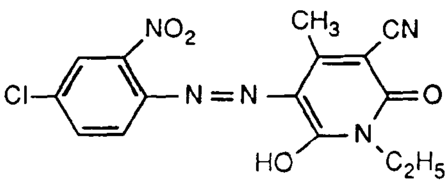

(143) gelb

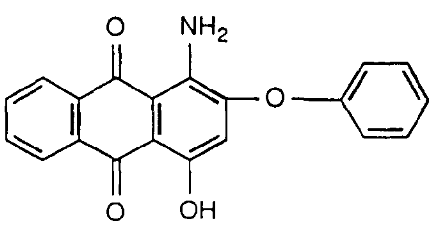

(144) rot

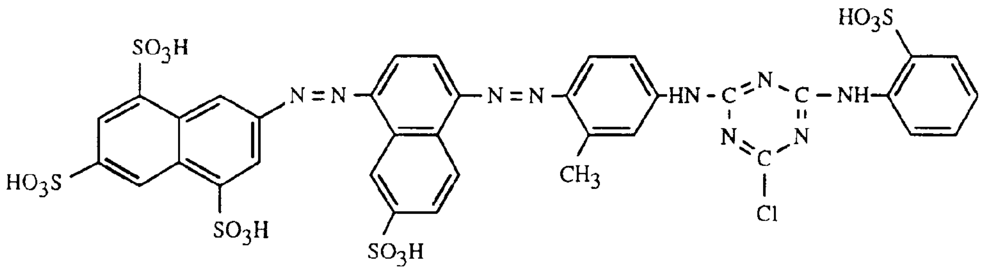

(145) braun

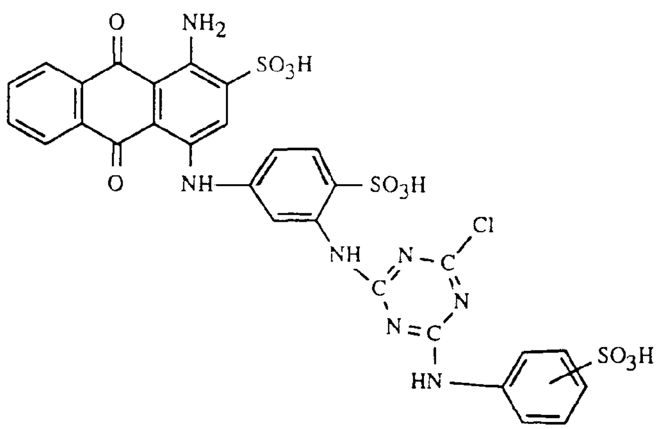

(146) blau

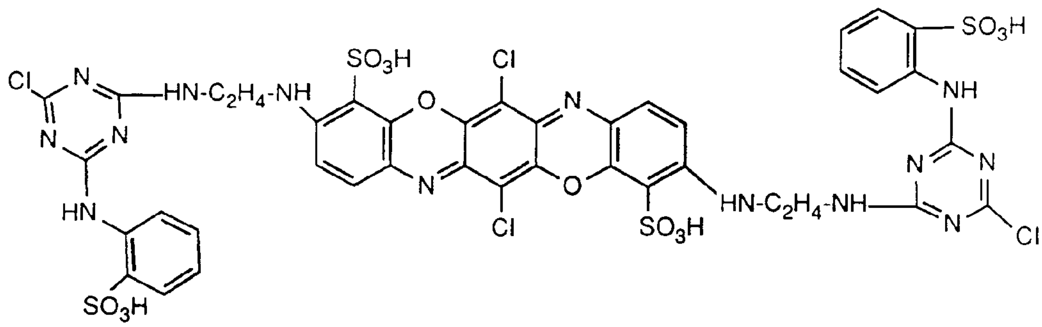

(147) blau

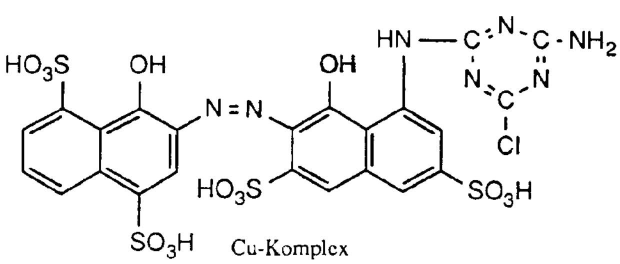

Cu-Komplex

(148) blau

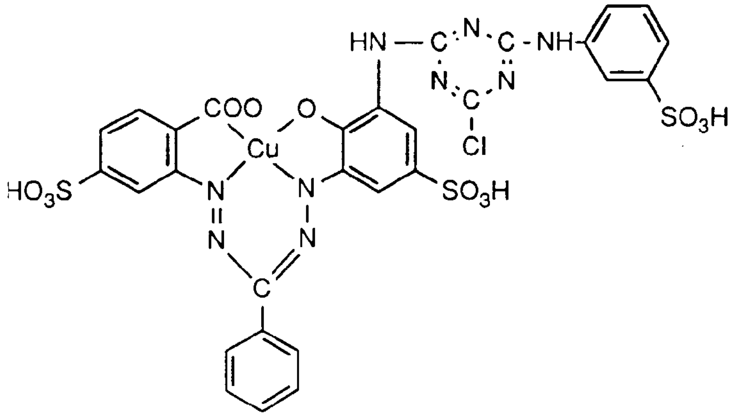

(149) blau

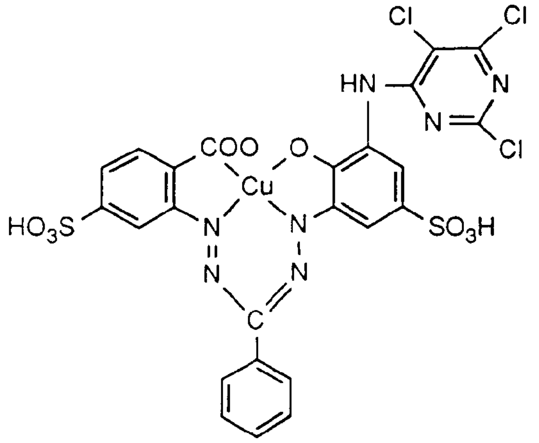

(150) blau

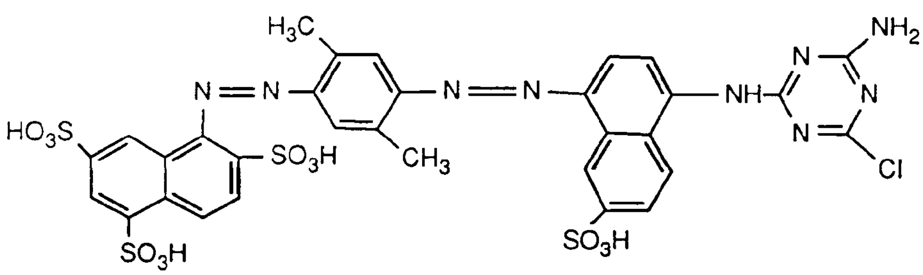

(151) braun

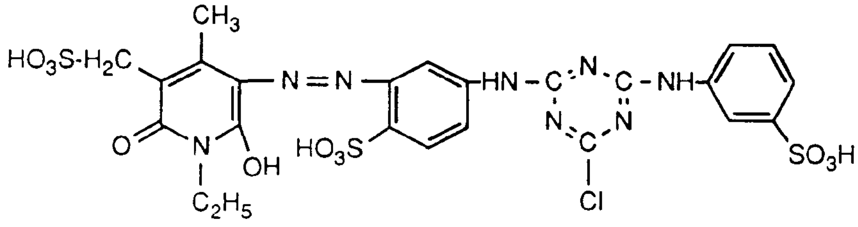

(152) gelb

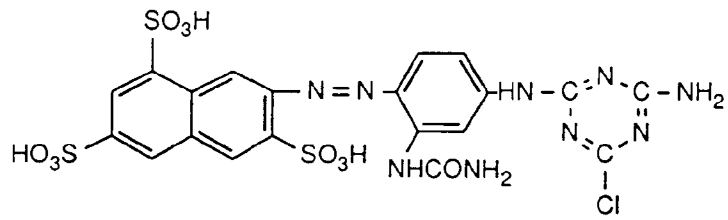

(153) gelb

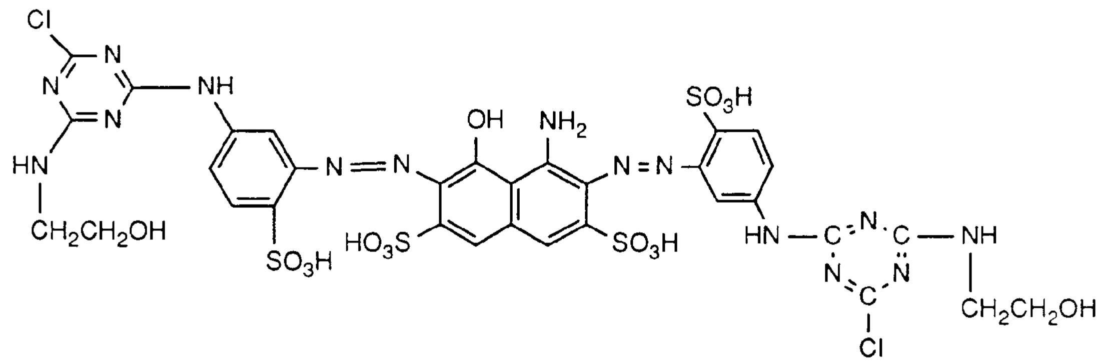

(154) marine

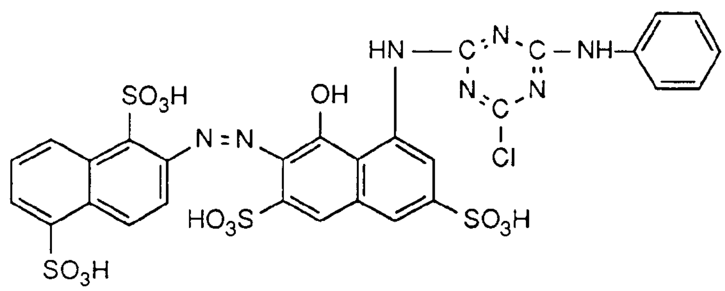

(155) rot

**Patentansprüche**

1. Verfahren zur Bestimmung eines einer vorgegebenen Farbe entsprechenden Färbe- oder Druckrezeptes, dadurch gekennzeichnet, dass
   a) eine vorgegebene Farbe in einem FTa*b*-Farbraum definiert wird, wobei FT eine Farbtiefen-Kenngrösse ist, welche unabhängig vom Farbton Orte gleicher Farbtiefe definiert, die definitionsgemäss in einer Ebene des FTa*b*-Farbraumes liegen, und a* und b* Daten des CIELab-Farbkoordinatensystems sind,
   b) der FTa*b*-Farbraum für jede Farbtiefenebene mittels der a*- und b*-Daten der für die Nachstellung einzusetzenden Farbstoffe in Dreiecksflächen segmentiert ist, wobei die Eckpunkte der Dreiecksflächen dem Farbort der zur Nachstellung vorgesehenen Farbstoffe entsprechen,
   c) in jeder definierten Farbtiefenebene die vorgegebenen a*- und b*-Daten einem bestimmten Verhältnis der Farbstoffe des in Frage kommenden Segments der Farbraumebene entsprechen, und
   d) das Verhältnis der Farbstoffe des in Frage kommenden Segments durch ein Iterationsverfahren erhalten wird.

2. Verfahren gemäss Anspruch 1, dadurch gekennzeichnet, dass eine vorgegebene Farbe und gegebenenfalls eine vorgegebene Form elektronisch, insbesondere digital mittels eines Scanners oder einer Videokamera aufgezeichnet wird, gegebenenfalls auf einem Bildschirm visualisiert wird, und gegebenenfalls bezüglich Form und Farbe noch verändert wird, und auf einem beliebigen Substrat mittels eines Farbdruckers ausgedruckt wird, wodurch der Farbort im FTa*b*-Farbraum definiert ist, gespeichert wird und

nachgestellt werden kann.

3. Verfahren gemäss einem der Ansprüche 1 und 2, dadurch gekennzeichnet, dass von allen zur Nachstellung einer Farbe eingesetzten Farbstoffe Eichdaten, FTa*b*-Daten, gespeichert werden.

4. Verfahren gemäss einem der Ansprüche 1 bis 3, dadurch gekennzeichnet, dass das gesuchte Verhältnis der Farbstoffe des Segments durch ein computergesteuertes Iterationsverfahren erhalten wird.

5. Verfahren gemäss einem der Ansprüche 1 bis 4, dadurch gekennzeichnet, dass Farbstoffe als Eckpunkte eines Segments verwendet werden, die definierte Vorgaben, insbesondere im applikatorischen Verhalten, aufweisen.

6. Verfahren gemäss einem der Ansprüche 1 bis 5, dadurch gekennzeichnet, dass Druckrezepte erstellt werden.

7. Verfahren gemäss einem der Ansprüche 1 bis 6, dadurch gekennzeichnet, dass zur Nachstellung der Farbvorlage, Dispersions-, Säure-, Metallkomplex-, Reaktiv-, Küpen-, Schwefel-, Direkt- und Pigment-Farbstoffe, kationische Farbstoffe, natürliche Farbstoffe, Entwicklungsfarbstoffe sowie Nahrungsmittelfarbstoffe verwendet werden.

8. Verfahren gemäss einem der Ansprüche 1 bis 7, dadurch gekennzeichnet, dass die erhaltenen Färbe- und Druckrezepte auf allen Substraten angewendet werden.

9. Anwendung des Verfahrens gemäss Anspruch 1 zur Herstellung einer Färbung oder eines Druckes gemäss Vorlage.

10. Anwendung des Verfahrens gemäss Anspruch 1 in einer computergesteuerten Färbestrasse oder einem computergesteuerten Druckablauf.

11. Anlage zur Bestimmung eines einer vorgegebenen Farbe entsprechenden Färbe- oder Druckrezeptes gemäss Anspruch 1, worin zur Bestimmung des Färbe- oder Druckrezeptes eine vorgegebene Farbe in einem FTa*b*-Farbraum definiert wird, wobei FT eine Farbtiefen-Kenngrösse ist, welche unabhängig vom Farbton Orte gleicher Farbtiefe definiert, die definitionsgemäss in einer Ebene des FTa*b*-Farbraumes liegen, und a* und b* Daten des CIELab-Farbkoordinatensystems sind, und der FTa*b*-Farbraum für jede Farbtiefenebene mittels der a*- und b*-Daten der für die Nachstellung einzusetzenden Farbstoffe in Dreiecksflächen segmentiert ist, wobei die Eckpunkte der Dreiecksflächen dem Farbort der zur Nachstellung vorgesehenen Farbstoffe entsprechen,
dadurch gekennzeichnet, dass die Anlage
a) einen Scanner oder eine Videokamera zur Digitalisierung von Vorlagen,
b) ein Computer-aided-Design-Gerät, welches die Visualisierung und Variation der Vorlage auf einem Bildschirm ermöglicht,
c) einen Farbdrucker, z.B. einen Ink-Jet-Drucker, der die Visualisierung der Vorlage bzw. der variierten Vorlage auf jedem beliebigen Substrat ermöglicht, und der für jede Vorlage bzw. jede variierte Vorlage die Koordinaten im FT-a*b*-Farbraum mittels eines Computers ermittelt, und
d) einen Computer, der die FTa*b*-Daten der einzusetzenden Farbstoffe speichert und über ein Iterationsverfahren das Rezept ermittelt,
enthält.

## Claims

1. A process for determining a dyeing or printing recipe corresponding to a given colour, characterized in that
a) a given colour is defined in an FTa*b* colour space, where FT is a depth of colour parameter which, independently of the hue, defines loci of equal depth of colour which, by definition, lie in a plane of the FTa*b* colour space, and a* and b* are values in the CIELab colour coordinate system,
b) the FTa*b* colour space is segmented, for each depth of colour plane, by means of the a* and b* values of the dyes to be used for matching the given colour, into triangular areas, the corner points of the triangular areas corresponding to the colour locus of the dyes contemplated for matching the given

colour,
c) within each defined depth of colour plane the given a* and b* values correspond to a certain ratio of the dyes of the suitable segment of the colour space plane, and
d) the ratio of the dyes of the suitable segment is obtained by a process of iteration.

2. A process according to claim 1, characterized in that a given colour is, with or without a given shape, recorded electronically, in particular digitally, by means of a scanner or a video camera optionally visualized on a monitor, and optionally amended with respect to shape and colour, and printed out on any desired substrate by means of a colour printer, whereby the colour locus has been defined within the FTa*b* colour space, is stored and can be matched.

3. A process according to either of claims 1 and 2, characterized in that all the dyes used for matching a colour are stored in terms of calibration data, FTa*b* data.

4. A process according to any one of claims 1 to 3, characterized in that the desired ratio of the dyes of the segment is obtained by a computer-controlled process of iteration.

5. A process according to any one of claims 1 to 4, characterized in that the corner points of a segment correspond to dyes which meet defined criteria, in particular in respect of application properties.

6. A process according to any one of claims 1 to 5, characterized in that printing recipes are produced.

7. A process according to any one of claims 1 to 6, characterized in that the colour standard is matched using disperse, acid, metal complex, reactive, vat, sulfur, direct and pigment dyes, cationic dyes, natural dyes, azoic dyes and food dyes.

8. A process according to any one of claims 1 to 7, wherein the dyeing and printing recipes obtained are used on any substrate.

9. The use of the process of claim 1 for producing a dyeing or print to match a standard.

10. The use of the process of claim 1 in a computer-controlled dyeing or printing line.

11. Apparatus for determining a dyeing or printing recipe corresponding to a given colour according to claim 1, wherein to determine the dyeing or printing recipe a given colour is defined in an FTa*b* colour space, where FT is a depth of colour parameter which, independently of the hue, defines loci of equal depth of colour which, by definition, lie in a plane of the FTa*b* colour space, and a* and b* are values in the CIELab colour coordinate system, and the FTa*b* colour space is segmented, for each depth of colour plane, by means of the a* and b* values of the dyes to be used for matching the given colour, into triangular areas, the corner points of the triangular areas corresponding to the colour locus of the dyes contemplated for matching the given colour, characterized in that the apparatus includes
a) a scanner or video camera for digitalizing standards,
b) a computer-aided design instrument which makes it possible to visualize and vary the standard on a monitor,
c) a colour printer, for example an inkjet printer, which makes it possible to visualize the standard or the varied standard, or the varied standard, on any desired substrate and which determines for every standard, or varied standard, the coordinates in the FTa*b* colour space by means of a computer, and
d) a computer which stores the FTa*b* data of the dyes to be used and determines the recipe via a process of iteration.

## Revendications

1. Procédé pour la détermination d'une formulation correspondant à une couleur d'origine, caractérisé en ce que
a) une couleur d'origine est définie dans un espace chromatique ICa*b*, IC étant un paramètre d'intensité de couleur qui définit indépendamment de leur chromaticité des lieux de même intensité de couleur situés par définition dans un même plan de l'espace chromatique, et a* et b* étant des paramètres du système de coordonnées chromatique CIELab,

b) l'espace chromatique ICa*b* est divisé pour chaque plan d'intensité en segments triangulaires, à l'aide des paramètres a* et b* des colorants employés pour la reproduction, les sommets des triangles correspondant au lieu chromatique des colorants utilisés pour la reproduction,
c) dans chaque plan d'intensité de couleur défini, les paramètres a* et b* correspondent à une certaine proportion des colorants du segment en question du plan de l'espace chromatique, et
d) la proportion des colorants du segment en question est obtenue par un procédé d'itération.

**2.** Procédé conforme à la revendication 1, caractérisé en ce que une couleur d'origine et éventuellement une forme d'origine est enregistrée électroniquement, en particulier numériquement, à l'aide d'un scanner ou d'une caméra vidéo, est visualisée sur un écran et éventuellement modifiée en ce qui concerne la forme ou la couleur, est imprimée sur un substrat quelconque à l'aide d'une imprimante couleur, définissant ainsi le lieu chromatique dans l'espace chromatique ICa*b*, est mémorisée et reproduite.

**3.** Procédé conforme à une des revendications 1 et 2, caractérisé en ce que l'on mémorise les caractéristiques, c'est à dire les valeurs des paramètres ICa*b*, de tous les colorants utilisés pour la reproduction d'une couleur.

**4.** Procédé conforme à une des revendications 1 à 3, caractérisé en ce que la proportion recherchée des colorants du segment est obtenue par un procédé d'itération.

**5.** Procédé conforme à une des revendications 1 à 4, caractérisé en ce que l'on utilise pour les sommets du segment, des colorants qui remplissent des impératifs définis, en particulier en ce qui concerne leurs propriétés d'application.

**6.** Procédé conforme à une des revendications 1 à 5, caractérisé en ce que l'on obtient des formulations d'impression.

**7.** Procédé conforme à une des revendications 1 à 6, caractérisé en ce que l'on utilise pour la reproduction de l'original en couleur des colorants de dispersion, des colorants acides, des colorants qui sont des complexes métalliques, des colorants réactifs, des colorants de cuve, des colorants au soufre, des colorants directs, des colorants à pigments, des colorants cationiques, des colorants naturels des colorants de développement ainsi que des colorants alimentaires.

**8.** Procédé conforme à une des revendications 1 à 7, caractérisé en ce que les formulations de teinture et d'impression peuvent être appliquées à tous les substrats.

**9.** Application du procédé conforme à la revendication 1 pour la réalisation d'une teinture ou d'une impression d'après un original.

**10.** Application du procédé conforme à la revendication 1 dans une chaîne de teinture commandée par ordinateur ou dans un procédé de teinture commandé par ordinateur.

**11.** Installation pour la détermination d'une formulation de teinture ou d'impression correspondant à un original de couleur, dans laquelle on définit pour la formulation de teinture ou d'impression, une couleur donnée dans un espace chromatique ICa*b*, IC étant un paramètre d'intensité de couleur définissant indépendamment du lieu chromatique des couleurs de même intensité, qui sont par définition situées dans un même plan de l'espace chromatique ICa*b*, et a* et b* étant les paramètres du système de coordonnés chromatique CIELab, et dans laquelle chaque plan de l'espace chromatique est divisé en segments triangulaires, les sommets des triangles correspondant au lieu chromatique des colorants prévus pour la reproduction, caractérisée en ce que l'installation contient
a) un scanner ou une caméra vidéo pour la numérisation des originaux,
b) un appareil de design assisté par ordinateur qui permet la visualisation et la modification de l'original sur un écran,
c) une imprimante couleur, par exemple une imprimante à jet d'encre, qui permet la visualisation de l'original ou de l'original modifié sur un substrat quelconque, et qui détermine à l'aide d'un ordinateur pour chaque original ou chaque original modifié les coordonnées dans l'espace chromatique ICa*b*,
d) un ordinateur, qui mémorise les caractéristiques ICa*b* des colorants à utiliser et détermine la formulation par un procédé d'itération.

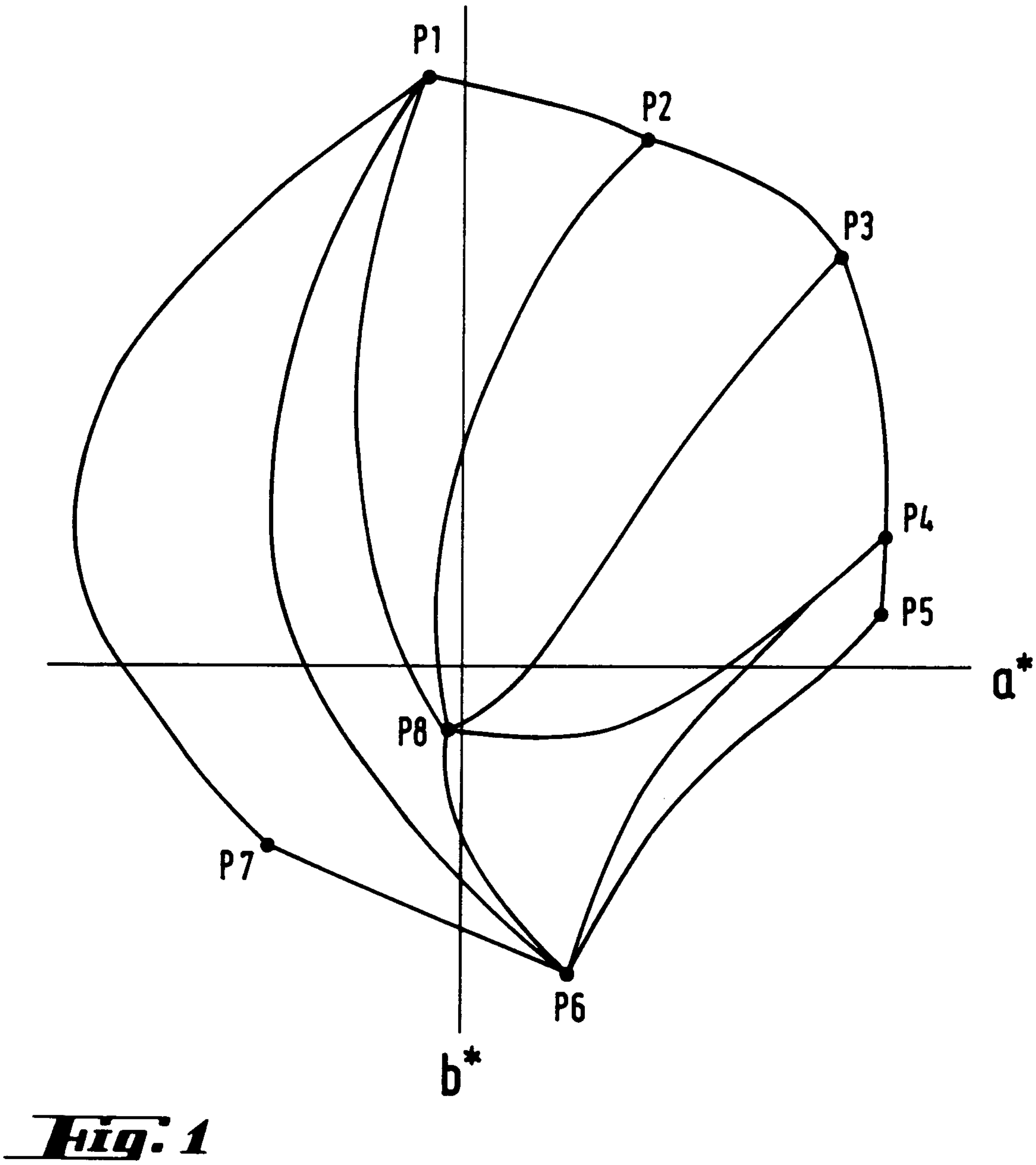


Fig. 1

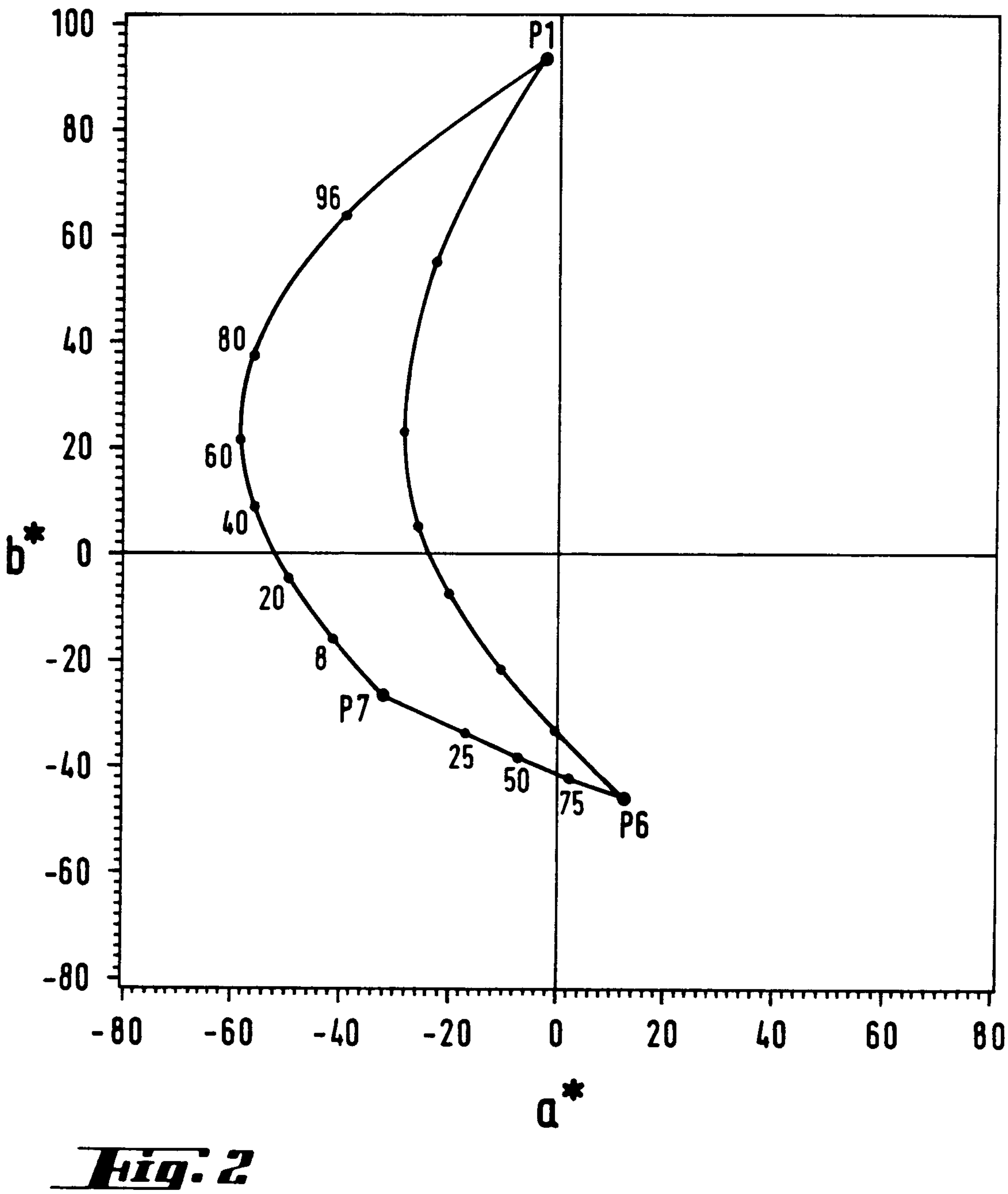
100
80
60
40
20
0
-20
-40
-60
-80
b*
-80
-60
-40
-20
0
20
40
60
80
a*
P1
96
80
60
40
20
8
P7
25
50
75
P6

Fig. 2

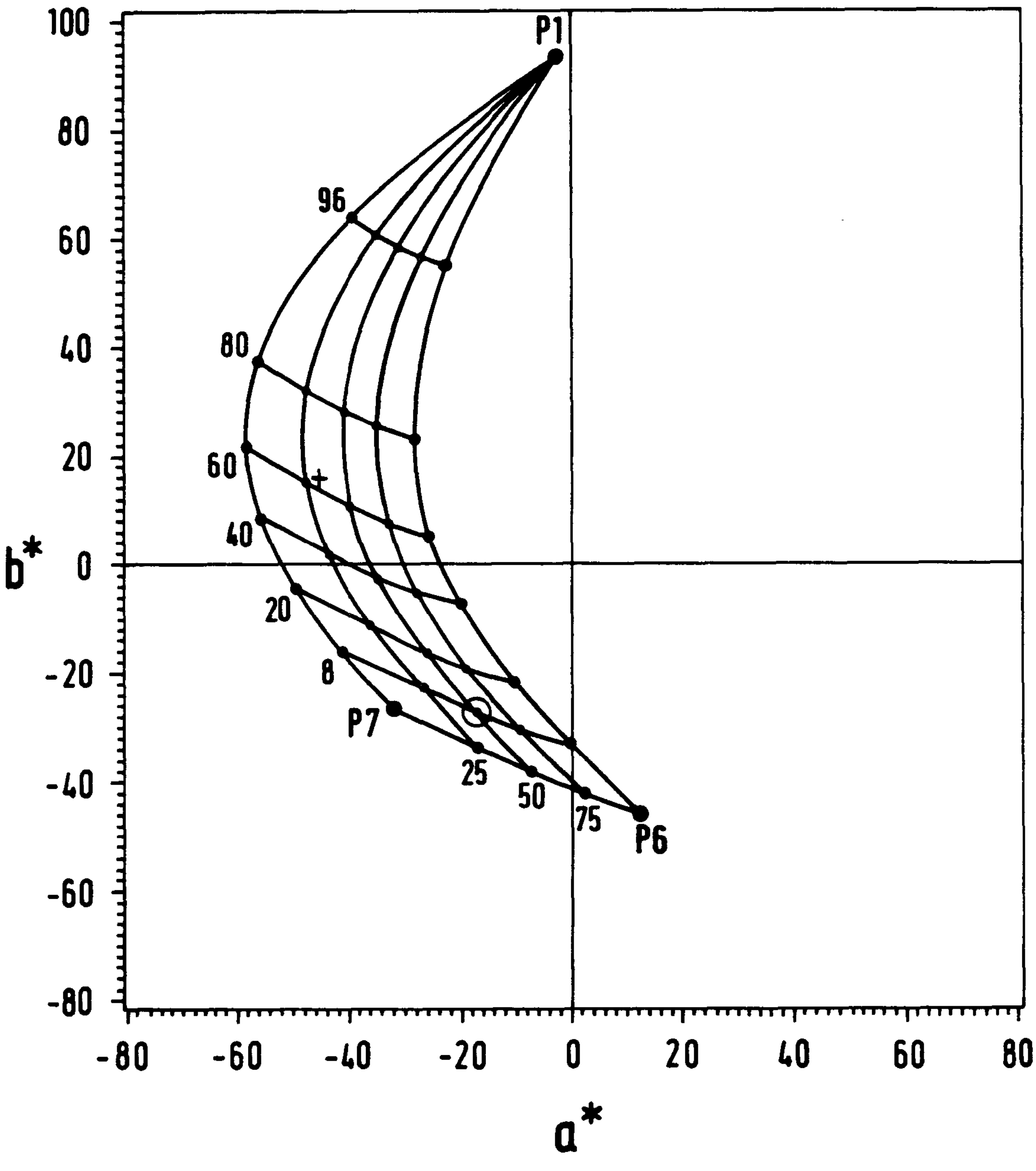
P1
96
80
60
40
20
8
P7
25
50
75
P6
100
80
60
40
20
0
-20
-40
-60
-80
b*
-80
-60
-40
-20
0
20
40
60
80
a*

Fig. 3